# EUROPEAN PATENT APPLICATION

(11) **EP 1 364 736 A1**
(43) Date of publication of application: **26.11.2003**
(21) Application number: 03010346.9
(22) Date of filing: 08.05.2003
(51) Int. Cl.: B23G 9/00

(54) **Method, kit and insert for replacing damaged threads**

(30) Priority: 20.05.2002 US 151196
(71) Applicant: Newfrey LLC, Newark, Delaware 19711 (US)
(72) Inventor: Botelle, John, D., Bethlehem, Connecticut 06092 (US); Giannakakos, William, Banbury, Connecticut 06811 (US); Phillips, Ron, West Simsbury, Connecticut 06092 (US)
(74) Representative: Haar, Lucas H., Dipl.-Ing.

(57) **Abstract**

An insert (22) useful for replacing damaged threads in a hole is provided. The damaged threads originally extend along an axial length of the hole. The insert (22) has an inner surface having inner threads (28) corresponding to the damaged threads being replaced. The insert (22) also has an outer surface having outer threads (34) extending an axial length that is greater than the originally extending axial length of the damaged threads. The insert (22) may be used to replace damaged threads in a spark plug hole. A kit (20) including the insert (22), a tap (24) having a thread milling section (44), and a retention mechanism implement is also provided. Preferably, the retention mechanism implement is an expansion tool (26) for imbedding knurled threads into surrounding material. The tap (24) has torque engagement mechanism with an outer radial dimension which is substantially equal to or smaller than the maximum outer radial dimension of the tap (24). An associated method is also provided.

## Description

The present invention relates to replacing damaged threads with an insert and associated methods and kits; and more particularly to such inserts and associated methods and kits for spark plug hole threads.

Threads in a spark plug hole in a cylinder head can be defective. For example, some newly designed engines utilize deep recessed holes for their spark plugs. These holes are typically located in areas which are hard to see and reach. Maintenance of these engines requires that the spark plugs be replaced and/or adjusted repeatedly during the engine's life. In addition, today's engine block castings are often made of relatively soft materials, such as aluminum. Consequently, the threads may become stripped or otherwise damaged to such an extent as to render them unusable. Replacing defective threads avoids the necessity of replacing entire cylinder head, which is a relatively expensive part of the engine.

In one aspect of the present invention an insert useful for replacing damaged threads in a hole is provided. The insert has an inner surface having inner threads corresponding to the damaged threads being replaced. The insert also has an outer surface having outer threads extending a length that is greater than the length of the damaged threads.

In another aspect of the present invention a kit useful for replacing damaged threads in a hole is provided. The kit includes the insert and a tap having a thread milling section, and a retention mechanism implement. Preferably, the retention mechanism implement is an expansion tool.

In yet another aspect of the present invention a method for replacing damaged threads in a hole is provided. The method includes enlarging the diameter of the hole and milling threads along the enlarged hole over a length greater than the length of the threads being replaced. In addition, an insert having outer threads along a length greater than the original threaded segment and having inner threads corresponding to the original threaded segment is threaded into the enlarged hole on the milled threads. Thereafter, the insert is fixed against rotation.

In a further aspect of the present invention a kit useful for replacing damaged threads and a hole is provided. The kit includes an insert having outer threads and a tap. The tap has a thread milling segment adapted to mill threads to cooperate with the outer threads. Further, the tap has a torque segment adapted to enable engagement of a torque generating tool with the tap while any engagement mechanisms of the torque generating tool remain substantially within an outer radial dimension of the tap.

In an additional aspect of the present invention a kit useful for replacing damaged threads and a hole is provided. The kit includes an insert having outer threads and a tap. The tap has a thread milling segment adapted to mill threads to cooperate with the outer threads. Further, the tap has a torque engagement mechanism adapted to engage a cooperating engagement mechanism of a torque generating tool. The engagement mechanisms have a maximum radial dimension that is substantially equal to or less than a maximum radial dimension of the tap.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
Figure 1 is a perspective view of a preferred embodiment of a kit for replacing damaged threads of a spark plug hole;
Figure 2 is a partially cross-sectional perspective view illustrating a spark plug hole with damaged threads of an engine block and the preferred tap of Figure 1;
Figure 3 is a partially cross-sectional perspective view illustrating an intermediate step in a preferred process of the present invention wherein the insert of Figure 1 is being located in the engine block;
Figure 4 is a partially cross-sectional perspective view similar to Figure 3 with the insert located in the engine block and illustrating the expansion tool of Figure 1;
Figure 5 is a partially cross-sectional perspective view of repaired spark plug hole utilizing the preferred kit, insert and process illustrated in the preceding drawings;
Figure 6 is a perspective view of another embodiment of a tap according to the invention; and
Figure 7 is a perspective view of further embodiment of a tap according to the invention.

The following description of the preferred embodiments is merely exemplary in nature and is in no way intended to limit the invention, its application, or uses. For example, although the invention is discussed throughout with respect to threads for spark plugs, the invention may be useful in many other threaded applications.

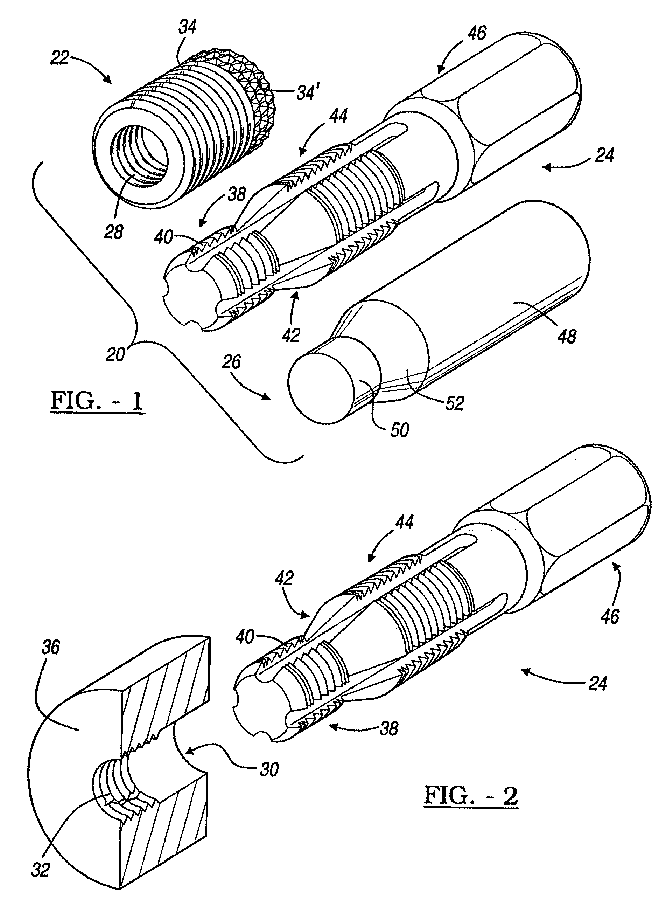

Referring to Figure 1, a preferred embodiment of a kit, generally indicated as 20, according to the present invention is illustrated. The kit 20 basically includes an insert 22, a tap 24, and an expanding tool 26. As illustrated, the insert 22 includes threads 28 located on its inner cylindrical surface. These inner threads 28 extend only about one-third of the overall axial length of the insert 22. Preferably, these inner threads 28 extend less than about 75 percent of the overall axial length of the insert 22; more preferably, less than about two-thirds of the overall axial length of the insert 22; even more preferably, less than about 50 percent of the overall axial length of the insert 22; and most preferably, less than about one-third the overall axial length of the insert 22.

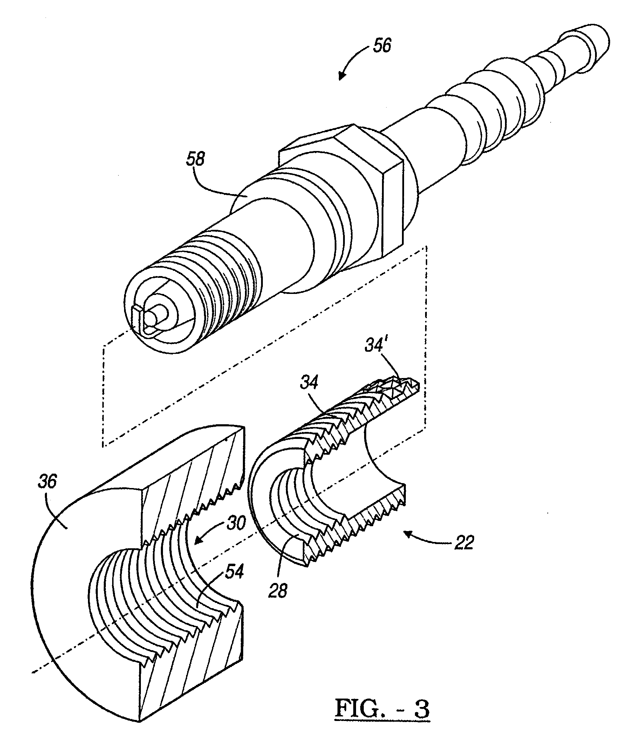

These inner threads 28 correspond to the original threads 32 of the spark plug hole 30, as seen in Figure 2. "Correspond" or "corresponding" as used herein, simply means the threads 28 are adapted to cooperate with the threads 32 of the spark plug or other fastening object which was originally intended to be inserted into the hole 30. Thus, the inner threads 28 are not necessarily of the identical axial length as the original threads 32 of the hole 30, although they correspond to the original threads 32 of the spark plug hole 30. Notwithstanding, the inner threads 28 preferably have an axial length which is about the same as the original damaged threads 32 being replaced; more preferably, have an axial length which is the same or less than the original threads 32; and even more preferably, have an axial length which is substantially identical to the original threads 32.

At least the inner threads 28 of the insert are preferably made of a material that is harder than the material of the engine block 36. The inner threads 28 may alternatively be treated or coated to increase their strength. Thus, the inner threads 28 of the insert are less susceptible to damage than the original spark plug hole threads 32. A particularly preferred material for constructing the insert 22 is carbon steel. Even when the material of the insert 22 is different from that of the engine block 36, the insert 22 preferably has a substantially identical heat expansion and contraction rate. In other words, the expansion and contraction of the insert 22 due to heat is preferably substantially identical to that of the surrounding engine block 36 material. This helps ensure a good seal is maintained between the insert 22 and the engine block during extended use.

With continuing reference to Figure 1 and Figure 2, the insert 22 includes outer threads 34 which preferably encompass the entire overall axial length of the outer surface of the insert 22, as illustrated. In addition, the outer threads 34 preferably axially extend at least about 1.25 times the axial length of the original, damaged threads 32; more preferably, at least about 1.6 times the axial length of the original, damaged threads 32; even more preferably, at least about 2 times the axial length of the original, damaged threads 32; and most preferably, at least about 3 times the axial length of original, damaged threads 32. By increasing the axial length of the outer threads 34 to an axial length greater than that of the original threads 32, more gripping force is possible between the insert 22 and the engine block 36, as indicated hereinafter.

The outer threads 34 include knurled threads near the distal end of the insert 34'. The knurled threads 34' act as teeth and help imbed the insert 22 into the inner wall of the expanded hole 30 of the engine block 36, as discussed hereinafter. Consequently, the knurled threads 34' act as a retention mechanism which helps prevent the insert 22 from rotating out of the engine block 36, after the insert 22 has been threaded into the enlarged hole 30.

In an alternative retention mechanism that is not illustrated, a flange is provided at the distal or outer axial end of the insert Thus, the flange may operate as a stop to frictionally engage the insert in place. It is highly preferred, however, that the radial outer surface of any such flange would include threads thereon. Thus, the axial length of the threads are preferably maximized to provide threads along the entire axial length of the outer surface of the insert

The tap 24 includes a smaller diameter threaded segment 38 at its distal end. The threads 40 of this segment 38 are adapted to cooperate with the original damaged threads 32 to help guide and pull the tap 24 into the original spark plug hole 30. A generally conically shaped reamer segment 42 is adapted to ream out the damaged threads 32 and the hole 30 to an enlarged diameter. This reamer segment 42 transitions to a larger diameter thread milling segment 44. The thread milling segment 44 is adapted to mill new larger diameter threads for the insert 22 into the engine block 36 material surrounding the hole 30. A last nut segment 46 operates as a mechanism to enable rotation of the tap 24 at the forces required.

The expansion tool 26 is a generally cylindrical member with a larger diameter segment 48, a smaller diameter segment 50, and a generally conically shaped surface segment 52 therebetween. The smaller diameter segment 50 is roughly the diameter of the internal, unthreaded portion of the insert 22. The conically shaped segment 52 is adapted to expand the insert 22 as discussed hereinafter. The distal end of the larger diameter segment 48 is adapted to receive a blow from a hammer, or other object to exert an axial force on the expansion tool 26.

Although the tap 24 and expansion tool 26 are illustrated herein as two separate and distinct members, the functional features of each may alternatively be provided as a single, integral tool. For example, the expansion tool 26 may be located across the distal end of the tap 24 with its axis perpendicular to the axis of the tap 24 and be useful as the rotation enabling mechanism of the tap 24.

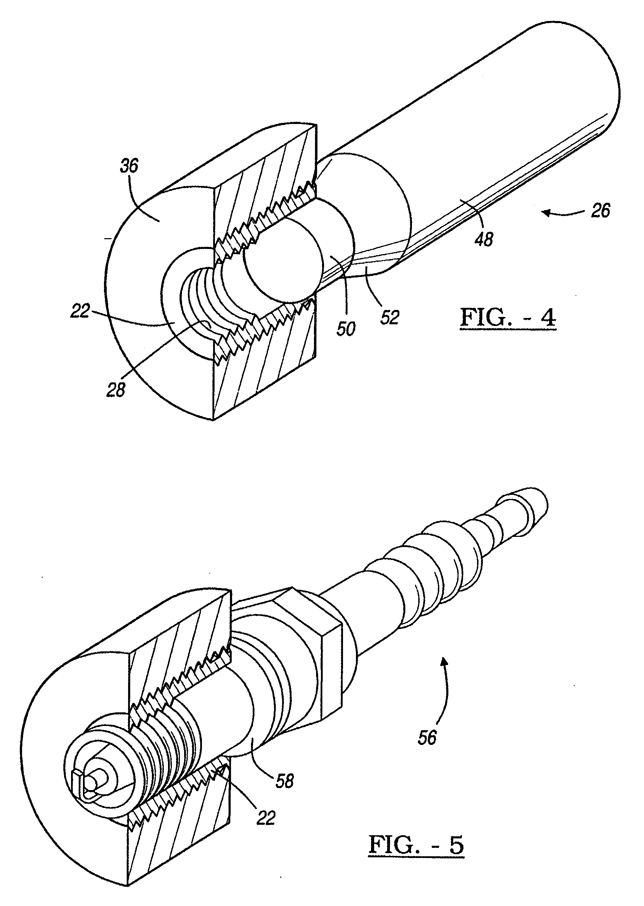

Referring to Figure 2, an original spark plug hole 30 in an engine block with damaged threads 32 is illustrated. In a preferred embodiment of the method as seen in the drawings the tap 24 is inserted into the spark plug hole 30. The outer surfaces of the tap 24 are lubricated, prior to inserting the tap 24 into the hole 30. The smaller diameter threads 40 at the distal end of the tap 24 help to initially guide and pull the tap 24 into the hole 30. As the reamer segment 42 of the tap 24 enters the hole 30, the reamer segment enlarges the hole 30. Continuing to rotate the tap 24, the milling segment 44 of the tap 24 passed into the hole 30 and mills threads 54 (seen in Figure 3) into the material of the engine block 36 surrounding the now enlarged hole 30. All of this is accomplished by the step of simply rotating the tap 24 as it passes into the hole 30. Thus, a single tool, the tap 24, accomplishes both the enlarging of the hole 30 and the milling of the threads 54 as a single step of rotating the tap 24.

If the damaged threads 32 are not adequate to pull the tap through the hole 30 , the hole 30 may alternatively be enlarged using a drill rather than the reamer segment 42 of the tap 24. The tap 24 is then utilized to mill the new threads 54 in the hole of the engine block 36 using the milling segment 44 as described above. Thus, a first tool - the drill (not seen) - is utilized to enlarge the hole 30 and a second, separate tool - the tap 24 is utilized to mill the threads 54 in two separate steps.

The larger diameter milling segment 44 of the tap mills the threads 54 into the sides of the enlarged hole 30. As can be seen by comparing the engine block 36 fragment of Figure 2 with that of Figure 3, the entire axial length of the enlarged hole 30 of the engine block 36 is preferably milled to have threads 54. Thus, the gripping force between the insert 22 and the typically softer material of the engine block 36 can be increased. For example, this increased gripping capacity permits the insert 22 to resist higher forces created by expanding gasses within the cylinder of the engine block 36 against an inserted spark plug 56.

Referring to Figure 3, the insert 22 is next threaded into the enlarged hole 30. Preferably, a sealant is coated onto the external threads 34 of the insert 22 to help insure against gases exiting the cylinder between the engine block 36 and the insert 22. The sealant is preferably, a high temperature RTV silicone. The sealant may, for example, include an adhesive and alternatively operate as the retention mechanism in place of the knurled threads 34'. Thus, a tube of adhesive may alternatively function as a retention mechanism implement of an alternative kit.

The insert 22 is threaded into the hole 30 so that the knurled threads 34' of the insert 22 are at the outer axial side of the hole 30. A spark plug 56 may be threaded onto the internal threads 28 of the insert 22 to help thread the external threads 34 of the insert 22 onto the threads 54 of the enlarged hole 30. The top of the insert 22 is preferably threaded into the enlarged hole 30 until its outer end is flush with the surrounding engine block 36.

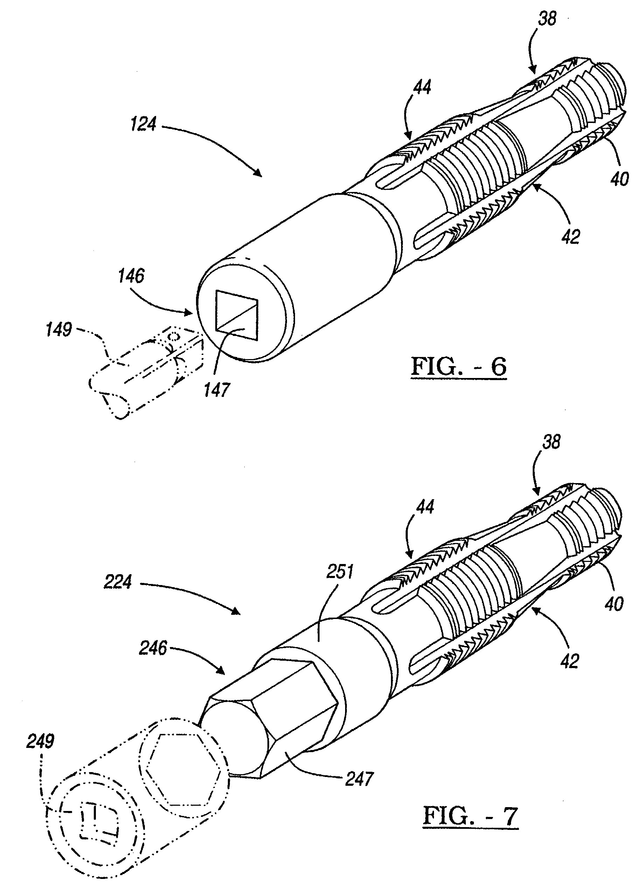

Referring to Figure 4, the smaller diameter segment 50 of the expansion tool 26 is placed into the insert 22 without turning. The relatively close fit between the outer diameter of the smaller segment 50 and the inner unthreaded portion of the insert 22 appropriately aligns the generally conically shaped surface segment 52 with the insert 22. An object (not shown), such as a hammer, is impacted onto the distal end of the expansion tool 26. This drives the knurled threads 34' of the insert 22 into the engine block 36 and provides a retention mechanism which helps prevent the insert 22 from thereafter rotating out of the engine block 36. The geometry of the conical shaped segment 52 of the expansion tool 26 creates a sealing surface between the insert 22 and the spark plug 56. In any case, after use of the expansion tool 26 the top end surface of the insert 22 is preferably configured to seal via compression with the sealing surface 58 of the spark plug 56. Thus, the expansion tool 26 acts as a retention mechanism implement of the kit 20.

Alternative preferred a taps 124, 224 are illustrated in Figure 6 and Figure 7. Although these taps 124, 224 are preferred in themselves, they are particularly preferred for use in preferred kits of the present invention. In each case, these taps 124, 224 include a torque segment 146, 246 which operates as a mechanism to enable rotation of the tap, 124 and 224, respectively, at the forces required. Furthermore, in each case these taps 124, 224 include such a torque segment 146, 246 which enables its cooperation with a torque generating tool substantially within the outer radial dimension of the tap 124, 224; and more preferably, fully within the outer radial dimension of the tap 124, 224.

Referring to Figure 6, a first alternative preferred tap 124 is illustrated. The tap 124 has a torque segment 146 which includes a recess 147. The recess 147 is adapted to receive a socket wrench, for example, via an extension member 149. The socket wrench and extension 149 are preferably not part of the kit, but are instead supplied by the user. Such an extension member 149 would fit into the recess 147 and engage therewith. Thus, torque generated by the socket wrench would be transmitted to the tap 124 by the cooperation between the socket wrench and the recess 147. Furthermore, it can be understood that the cooperation between the socket wrench and the tap 124 occurs fully within the outer radial dimension of the tap 124. Consequently, the engagement of the socket wrench with the tap 124 occurs fully within the outer radial dimension of the tap 124.

Referring to Figure 7, another alternative preferred tap 224 is illustrated. The tap 224 has a torque segment 246 which includes a nut segment 247. This nut segment 247 is dimension to be smaller than the maximum radial dimension, or diameter, of the tap 246. In addition, segment 249 is preferably of a diameter which is substantially equal to or less than the outermost diameter of the milling thread segment 44. An appropriately sized socket 249 of a socket wrench is adapted to engage nut segment 247 and to transmit torque to the tap 224. Again, the socket wrench and socket 249 are preferably not part of the kit, but are instead supplied by the user.

The outer diameter of the appropriately sized socket 249 is preferably substantially equal to or less than the maximum diameter of the tap 224. More preferably, the outer diameter of the appropriately sized socket 249 is equal to or less than the maximum diameter of the tap 224. Consequently, in such a preferred execution as illustrated the cooperating elements between the torque generating tool and the tap 224 enable engagement while remaining fully within the maximum outer radial dimensions of the tap 224.

Only a small number of the many possible alternatives are described above. Many additional modifications and alternatives beyond those described above, however, may be made without departing from the spirit and scope of the inventions disclosed above. For example, the insert may alternatively be comprised of annular segments of varying diameters connected together, rather than the illustrated single diameter annular segment. Thus, the tap, would be appropriately redesigned.

The description of the invention is merely exemplary in nature and, thus, variations that do not depart from the gist of the invention are intended to be within the scope of the invention. Such variations are not to be regarded as a departure from the spirit and scope of the invention. Thus, the invention encompasses all modifications within the scope of the appended claims.

## Claims

1. An insert useful for replacing damaged threads in a hole, the insert comprising:
an inner surface having inner threads corresponding to the damaged threads being replaced; and
an outer surface having outer threads extending a length that is greater than the originally extending length of the damaged threads.

2. An insert according to Claim 1, further comprising knurled threads on the outer surface of the insert.

3. An insert according to any one of the previous claims, wherein the length of the outer threads is at least about 1.5 times greater than the length of the damaged threads.

4. An insert according to any one of the previous claims, wherein the inner threads are harder than the damaged threads being replaced.

5. An insert according to any one of the previous claims, wherein the inner threads are about the same length as the length of the damaged threads.

6. An insert according to any one of the previous claims, further comprising a sealing surface located at the distal end of the insert and adapted to form a compression seal against a cooperating surface of a spark plug.

7. A kit useful for replacing damaged threads in a hole, the kit comprising:
an insert having an inner cylindrical surface and an outer cylindrical surface, the inner cylindrical surface having inner threads corresponding to the damaged threads being replaced, the outer surface having outer threads extending a distance greater than that of the threads being replaced;
a tap having a thread milling segment adapted to mill threads to cooperate with the outer threads; and
a retention mechanism implement.

8. A kit according to Claim 7, wherein the tap further comprises, a guiding thread adapted to cooperate with the damaged threads being replaced, and a reaming segment between the guiding thread and the thread milling segment.

9. A kit according to Claim 7 or 8, wherein the insert further comprises knurled threads at one end thereof and wherein the retention mechanism implement is an expansion tool adapted to imbed the knurled threads into a material surrounding the hole.

10. A kit according to any one of the previous Claim 7 to 9, wherein the axial length of the outer threads of the insert is at least about 1.5 times greater than the length of the damaged threads.

11. A kit according to any one of the previous Claims 7 to 10, wherein the inner threads of the insert are harder than the damaged threads being replaced.

12. A kit according to any one of the previous Claims 7 to 11, wherein the inner threads of the insert are about the same axial length as the originally extending axial length of the damaged threads.

13. An kit according to any one of the previous Claims 7 to 12, wherein the insert further comprises a sealing surface located at the distal end of the insert and adapted to form a compression seal against a cooperating surface of a spark plug.

14. A method for replacing damaged threads in a hole, the method comprising the steps of:
enlarging the diameter of the hole;
milling threads along the enlarged hole over a length greater than the length of the threads being replaced;
threading an insert having outer threads along a length greater than the original threaded segment and having inner threads corresponding to the original threaded segment into the enlarged hole on the milled threads; and
thereafter fixing the insert against rotation.

15. A method according to Claim 14, further comprising the step of threading a spark plug onto the inner threads of the insert

16. A method according to Claim 14, wherein the step of threading the spark plug further comprises sealing the spark plug against an end of the insert

17. A method according to any one of the previous Claims 14 to 16, wherein the steps of enlarging the diameter of the hole and milling threads along the enlarged hole are accomplished utilizing a single step tool having a reamer segment and a thread milling segment.

18. A method according to any one of the previous Claims 14 to 17, wherein the step of fixing the insert against rotation further comprises pushing knurled threads of the insert into a material surrounding the hole.

19. A method according to any one of the previous Claims 14 to 18, further comprising the step of applying a sealant between the outer threads of the insert and a material surrounding the enlarged hole.

20. A kit useful for replacing damaged threads and a hole, the kit comprising:
an insert having an inner cylindrical surface and outer cylindrical surface, the inner cylindrical surface having inner threads corresponding to the damaged threads being replaced, the outer surface having outer threads; and
a tap having a thread milling segment adapted to mill threads to cooperate with the outer threads, the tap further having a torque segment adapted to enable engagement of a torque generating tool with the tap while any engagement mechanisms of the torque generating tool remain substantially within an outer radial dimension of the tap.

21. A kit according to Claim 20, wherein the torque generating tool is not a part of the kit.

22. A kit according to Claim 20 or 21, wherein the torque segment includes a recess adapted to enable engagement with the torque generating tool and wherein the torque generating tool comprises a socket wrench.

23. A kit according to any one of the previous Claims 20 to 22, wherein the torque segment includes a nut segment adapted to enable engagement with the torque generating tool and wherein the torque generating tool comprises a socket.

24. A kit according to any one of the previous Claims 20 to 23, further comprising a retention mechanism implement.

25. A kit according to any one of the previous Claims 20 to 24, wherein any engagement mechanisms of the torque generating tool remain substantially within the outer radial dimensions of the tap along substantially an entire length of the tap.

26. A kit according to any one of the previous Claims 20 to 25, wherein any engagement mechanisms of the torque generating tool remain within the outer radial dimensions of the tap.

27. A kit according to any one of the previous Claims 20 to 26, wherein one of the outer radial dimension of the tap and an outer radial dimension of the torque generating tool is defined by an outer circumferential wall.

28. A kit according to any one of the previous Claims 20 to 27, wherein one of the maximum outer radial dimension of the tap and an outer radial dimension of the torque generating tool is defined by an outer diameter of a cylindrical segment thereof

29. A kit useful for replacing damaged threads and a hole, the kit comprising:
an insert having an inner cylindrical surface and outer cylindrical surface, the inner cylindrical surface having inner threads corresponding to the damaged threads being replaced, the outer surface having outer threads; and
a tap having a thread milling segment adapted to mill threads to cooperate with the outer threads, the tap further having a torque engagement mechanism adapted to engage a cooperating engagement mechanism of a torque generating tool, the engagement mechanisms having a maximum radial dimension that is substantially equal to or less than a maximum radial dimension of the tap.

30. A kit according to Claim 29, wherein the torque generating tool is not a part of the kit.

31. A kit according to Claim 29 or 30, wherein the torque engagement mechanism has a recess adapted to enable engagement with the torque generating tool and wherein the torque generating tool comprises a socket wrench.

32. A kit according to any one of the previous Claims 29 to 31, wherein the torque engagement mechanism has a nut segment adapted to enable engagement with the torque generating tool and wherein the torque generating tool comprises a socket.

33. A kit according to any one of the previous Claims 29 to 32, further comprising a retention mechanism implement.

34. A kit according to any one of the Claims 29 to 33, wherein the engagement mechanisms have a maximum radial dimension that is substantially equal to or less than a maximum radial dimension of the tap along substantially an entire length of the tap.

35. A kit according to any one of the previous Claims 29 to 34, wherein the cooperating engagement mechanism of the torque generating tool has a maximum radial dimension that is equal to or less than a maximum radial dimension of the tap.
